# EUROPEAN PATENT APPLICATION

(11) **EP 2 554 650 A1**
(43) Date of publication of application: **06.02.2013**
(21) Application number: 11176136.7
(22) Date of filing: 01.08.2011
(51) Int. Cl.: C12C 5/02, C12C 11/00, C12G 1/02, C12G 3/00, C12P 11/00

(54) **Method of producing an alcoholic beverage having a fruity flavor**

(71) Applicant: Pernod-Ricard, 75116 Paris (FR); Institut National de Recherche en Agronomie (INRA), 75338 Paris Cedex 07 (FR)
(72) Inventor: Frost, Andrew, Blenheim 7201 (NZ); Harsch, Michael, Blenheim 7201 (NZ); Benkwitz, Frank, Auckland 1071 (NZ); Marfell, William James, RD2 Blenheim 7272 (NZ); Dorsey, Audrey Joyce, Blenheim 7201 (NZ)
(74) Representative: Maureau, Philippe

(57) **Abstract**

The invention concerns a method of producing an alcoholic beverage having flavor and taste of passion fruit and grapefruit which comprises the following steps :
a) providing a gas stream containing hydrogen sulfide,
b) bubbling the gas stream containing hydrogen sulfide into a grape juice prior to inoculation by yeast, and/or during ferment,
c) carrying out the fermentation,
d) obtaining an alcoholic beverage having an improved level of volatile thiols.

The alcoholic beverage obtainable by the method can be chosen in the group constituted by wines, beers and spirits, preferably Sauvignon Blanc wine.

## Description

The present invention relates to a method of producing an alcoholic beverage having a fruity flavor and taste in nuance ranging from grapefruit to passion fruit. In particular, the alcoholic beverage is a Sauvignon Blanc wine, especially from New Zealand.

The aroma of a product is often one of the most important factors in determining the quality and intrinsic value of the product. For example, small variations in the presence and concentration of volatile aroma compounds can have an effect on the quality of an alcoholic beverage.

In the case of wine, some of the most potent aromas compounds are volatile thiols, in particular 4-mercapto-4-methylpentan-2-one (4MMP), 3-mercaptohexan-1-ol (3MH) and 3-mercaptohexyl acetate (3MHA). Volatile thiols are almost non-existent in grape juice and develop during fermentation.

Given that small variations in the presence and concentration of volatile aroma compounds can have a significant effect on the quality of products such as wine, there exists a need for a method of producing alcoholic beverage having such aroma compounds. Thus, the regulation of the amount of thiols, and in particular 3MH and 3MHA, in wine allows for the development of new technologies permitting winemakers to more precisely alter the amounts of these distinctive flavours compounds in their product. Such a technology would, therefore, be of significant commercial value.

There are well-known methods of producing alcoholic beverages having a fruity flavor and taste in nuance ranging from grapefruit to passion fruit.

International application W02007/095682 A1 describes a method of modulating the aroma of a wine product including a non-volatile sulfur compound, the method including exposing the product to an isolated enzyme having a carbon sulfur lyase enzyme activity capable of converting the non-volatile sulfur compound to a volatile thiol compound, wherein the aroma of the product is modulated by conversion of the non-volatile sulfur compound to a volatile thiol compound.

International application W02009/11807 A1 relates to yeast strains, yeast fermentation starter cultures and methods of fermentation that allow for increased levels of 3MH and 3 MHA in wine.

Canadian application CA 2,221,921 describes a method of producing an alcoholic aqueous beverage by conventional mashing of the malt, lautering, boiling, cooling, fermenting, and storage, characterized in hemp plants (flowers and/or flower parts and/or products produced thereof) which may be added at any point in time during boiling, fermenting or storage. The beverage of the invention has a fruity flavor and taste in nuances ranging from grapefruit to mango and passion fruit.

It is an object of the present invention to provide a useful alternative for producing an alcoholic beverage having a fruity flavor, in particular grapefruit and passion fruit, which is easily carried out and which provides a better control of the level of the aromas in the obtained alcoholic beverage than other known methods of producing alcoholic beverages.

The object of the present invention is a method of producing an alcoholic beverage having flavor and taste of passion fruit and grapefruit which comprises the following steps:
a) providing a gas stream containing hydrogen sulfide,
b) bubbling the gas stream containing hydrogen sulfide into a grape juice prior to inoculation by yeast, and/or during ferment,
c) carrying out the fermentation,
d) obtaining an alcoholic beverage having an improved level of volatile thiols.

Preferably, the gas stream containing hydrogen sulfide is taken from an existing wine ferment producing hydrogen sulfide naturally. Hydrogen sulfide gas is a natural and minor by-product of yeast during wine fermentation.

The inventors have found surprisingly, that thanks to the bubbling of a gas stream containing hydrogen sulfide, the volatile thiol content of 3MH and 3MHA in the finished wine has been increased, in some cases tripled in relation to the volatile thiol content of wine obtained by standard methods.

Indeed, the hydrogen sulfide reacts with thiol precursors which are present in the grape fruit and juice prior to the fermentation. The adducts obtained by this reaction are subsequently transformed into 3MH and 3MHA by yeast during the fermentation.

According to the method of producing an alcoholic beverage of the present invention, the bubbling of hydrogen sulfide can be carried out into the grape juice and be continued during the fermentation

The hydrogen sulfide content in the gas stream may be from 6 ppm to 13 ppm, preferably around 10ppm.

A ferment giving off obvious hydrogen sulfide is chosen and the tank is sealed with an outlet pipe.

Advantageously, the bubbling of the gas stream containing hydrogen sulfide is carried out with gas sintered spargers. The spargers are porous and produce fine bubbles which have a high ratio of surface area to volume. A pressure relief valve is required to ensure the tank is not over pressurized.

The depth of the outlet of the gas supply through the sparger has to be determined by the head pressure of the liquid being less than the gas pressure otherwise no gas is expelled.

The volume of gas and the flow rate are determined by the rate of fermentation and volume of the supplying ferment. Bubbling of the gas stream is dependent on the equipment in the winery.

The use of a sparger has the advantage that the bubbles are smaller.

The alcoholic beverage is chosen in the group constituted by wines, the beers and spirits. Most preferably, the alcoholic beverage is a Sauvignon Blanc wine.

Thanks to the bubbling of hydrogen sulfide which can be precisely controlled, the method of producing an alcoholic beverage according to the present invention provides a better control of the level of grapefruit and passion fruit aromas than other known methods of producing alcoholic beverages. It represents a very valuable tool for wine industry. Increasing and controlling 3MH and 3MHA content in Sauvignon Blanc wine is an important tool, which enables the more accurate creation of specific wine styles. The level of these aromas could be lifted if desired for a specific style, and the natural vintage to vintage variation reduced offering more consistent wines. This makes it easier for wineries to target different markets and hence increase their market share.

Furthermore, the method of producing an alcoholic beverage according to the present invention harnesses the potential thiol precursors which although used for thiol production during wine fermentation are limited by the lack of hydrogen sulfide for this reaction.

A further object of the present invention is an alcoholic beverage obtainable by the production method described above.

Another object of the present invention is the use of a gas stream containing hydrogen sulfide to increase the level of volatile thiols in an alcoholic beverage.

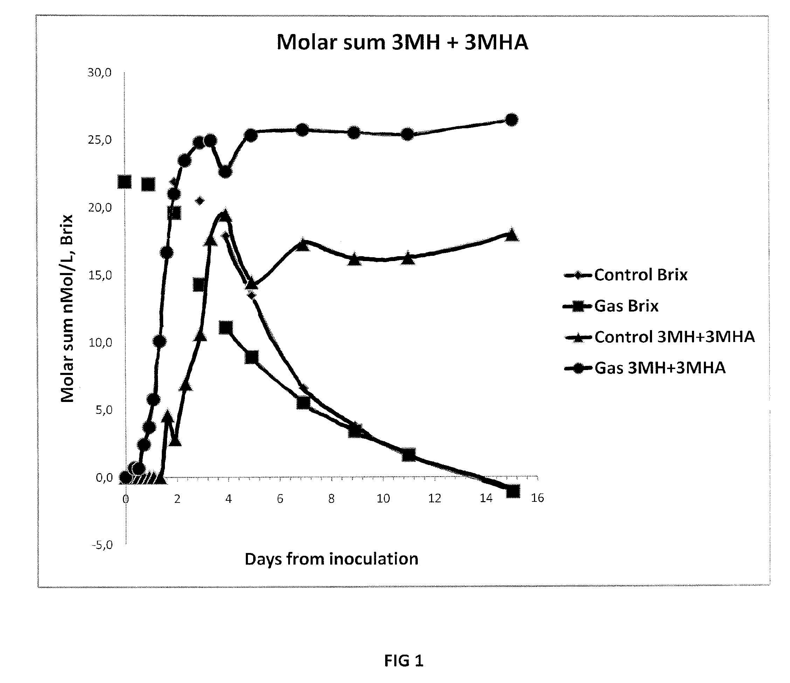

Figure 1 is a graph showing the influence of the bubbling of hydrogen sulfide on the production of the thiols 3MH and 3MHA during the production of Sauvignon Blanc wine.

The x-axis represents the days from the inoculation and the y-axis is the molar concentration sum of 3MH and 3MHA (nMol/L).

The curve entitled "control 3MH+3MHA" represents the evolution of the concentration of 3MH and 3MHA in function of time from the inoculation, when the Sauvignon Blanc wine is produced in the absence of a bubbling of sulfide hydrogen.

The curve entitled "Gas 3MH+3MHA" represents the evolution of the concentration of the thiols 3MH and 3MHA in function of the time from the inoculation, when the Sauvignon Blanc wine is subjected to a bubbling of sulfide hydrogen, i.e. according to the method of the present invention. The gas was taken from a large sparkling wine ferment that was fermenting fast and ran out of hydrogen sulfide. The gas supplemented ferment was over 100 000 L.

The curve entitled "Control Brix" shows the progress of the fermentation, i.e. the fall of the sugar content , when the production of wine is carried out in the absence of a bubbling of hydrogen sulfide.

The curve entitled "Gas Brix" shows the progress of the fermentation, i.e. the fall of the sugar content , when the production of wine is carried out in the presence of a bubbling of hydrogen sulfide, i.e. according to the method of the present invention.

The graph shows that the level of thiols starts at zero. Indeed, there is a delay then thiols climb in the early phase of the ferment and in this case leveled off, with a small increase at the end.

In the experiment according to the invention, the gas containing hydrogen sulfide was turned off after 2 days into ferment, because the feed ferment stopped producing hydrogen sulfide.

In view of the graph, it can be noticed that the production of thiols is higher when the production of wine is subjected to a bubbling of hydrogen sulfide, i.e.according to the present invention, than in the absence of a bubbling of hydrogen sulfide.

## Claims

1. Method of producing an alcoholic beverage having flavor and taste of passion fruit and grapefruit which comprises the following steps :
a) providing a gas stream containing hydrogen sulfide,
b) bubbling the gas stream containing hydrogen sulfide into a grape juice prior to inoculation by yeast, and/or during ferment,
c) carrying out the fermentation,
d) obtaining an alcoholic beverage having an improved level of volatile thiols.

2. Method of producing an alcoholic beverage according to claim 1, wherein the gas stream containing hydrogen sulfide is taken from an existing wine ferment producing hydrogen sulfide naturally.

3. Method of producing an alcoholic beverage according to claim 1 or claim 2, wherein the bubbling of the gas stream containing hydrogen sulfide is carried out with gas sintered spargers.

4. Method of producing an alcoholic beverage according to anyone of the preceding claims, wherein the alcoholic beverage is chosen in the group constituted by wines, beers and spirits.

5. Method of producing an alcoholic beverage according to anyone of the preceding claims, wherein the alcoholic beverage is a Sauvignon Blanc wine.

6. An alcoholic beverage obtainable by the method of producing according to anyone of the claims 1 to 5.

7. Use of a gas stream containing hydrogen sulfide to increase the level of volatile thiols in an alcoholic beverage.
